(19) Europäisches Patentamt
European Patent Office
Office européen des brevets

(11) **EP 4 478 710 A1**

(12) **EUROPEAN PATENT APPLICATION**
published in accordance with Art. 153(4) EPC

(43) Date of publication:
**18.12.2024 Bulletin 2024/51**

(21) Application number: 23753237.9

(22) Date of filing: **13.02.2023**

(51) International Patent Classification (IPC):
*H04N 19/117* (2014.01)   *H04N 19/132* (2014.01)
*H04N 19/176* (2014.01)   *H04N 19/105* (2014.01)
*H04N 19/70* (2014.01)

(52) Cooperative Patent Classification (CPC):
**H04N 19/105; H04N 19/117; H04N 19/132;
H04N 19/176; H04N 19/70**

(86) International application number:
**PCT/KR2023/002056**

(87) International publication number:
**WO 2023/153891 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.02.2022 US 202263309643 P**

(71) Applicant: **LG Electronics Inc.
Yeongdeungpo-gu
Seoul 07336 (KR)**

(72) Inventors:
• **PARK, Naeri
  Seoul 06772 (KR)**
• **JANG, Hyeongmoon
  Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **IMAGE ENCODING/DECODING METHOD AND DEVICE, AND RECORDING MEDIUM ON WHICH BIT-STREAM IS STORED**

(57)     An image decoding/encoding method and device according to the present disclosure can determine an interpolation filter of the current block on the basis of a candidate list including a plurality of pre-defined interpolation filter candidates, generate a prediction sample of the current block on the basis of the interpolation filter of the current block, and decode/encode the current block on the basis of the prediction sample of the current block.

**FIG.4**

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide a method and an apparatus for adaptively determining an interpolation filter based on a candidate list.

The present disclosure seeks to provide a method and an apparatus for configuring a candidate list for an adaptive interpolation filter technique.

The present disclosure seeks to provide a method and an apparatus for signaling/deriving a flag for adaptively using an adaptive interpolation filter technique.

The present disclosure seeks to provide a method and an apparatus for propagating interpolation filter-related information in an adaptive interpolation filter technique.

[Technical Solution]

An image decoding method and device according to the present disclosure may determine an interpolation filter of a current block based on a candidate list including a plurality of interpolation filter candidates pre-defined in a decoding apparatus, generate a prediction sample of the current block based on an interpolation filter of the current block, and reconstruct the current block based on a prediction sample of the current block.

In an image decoding method and device according to the present disclosure, determining the interpolation filter may include calculating SAD values corresponding to the plurality of interpolation filter candidates respectively, the SAD values may be calculated based on a template region of the current block and a template region of a reference block, and the reference block may include at least one of a reference block in an L0 direction or a reference block in an L1 direction.

In an image decoding method and device according to the present disclosure, a reordered candidate list may be generated by reordering the interpolation filter candidates in ascending order of the SAD values. Based on index information signaled from a bitstream, an interpolation filter of the current block may be determined from the reordered candidate list. The index information may indicate one of a plurality of interpolation filter candidates belonging to the reordered candidate list.

In an image decoding method and device according to the present disclosure, the SAD values may be calculated for reference picture list 0 and reference picture list 1, respectively.

In an image decoding method and device according to the present disclosure, the candidate list may include at least one of a DCT-based interpolation filter, a Gaussian interpolation filter or a sharpening interpolation filter.

In an image decoding method and device according to the present disclosure, the DCT-based interpolation filter may include at least one of a 8-tap first DCT-based interpolation filter or a 12-tap second DCT-based interpolation filter, and the Gaussian interpolation filter may include at least one of a 8-tap first Gaussian interpolation filter or a 12-tap second Gaussian interpolation filter.

In an image decoding method and device according to the present disclosure, determining an interpolation filter of the current block based on the candidate list may be performed based on first flag information indicating whether an adaptive interpolation filter technique is used for the current block.

In an image decoding method and device according to the present disclosure, the first flag information may be determined based on at least one of second flag information indicating whether the adaptive filter technique is allowed in a video sequence including the current block, a quantization parameter of the current block, a size of the current block, or an inter prediction mode of the current block.

In an image decoding method and device according to the present disclosure, the candidate list may be determined as one of a plurality of candidate lists pre-defined in the decoding apparatus.

In an image decoding method and device according to the present disclosure, an interpolation filter for a chroma component of the current block may be determined independently from an interpolation filter for a luma component of the current block.

In an image decoding method and device according to the present disclosure, the candidate list may be reconfigured based on an interpolation filter used in at least one of a picture, a slice, or a block decoded before the current block.

An image encoding method and device according to the present disclosure may determine an interpolation filter of a current block based on a candidate list including a plurality of interpolation filter candidates pre-defined in an encoding apparatus, generate a prediction sample of the current block based on an interpolation filter of the current block, and encode the current block based on a prediction sample of the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and apparatus for transmitting video/image information generated according to the image encoding method according to the present disclosure are provided.

[Advantageous Effects]

According to the present disclosure, encoding efficiency in a motion compensation process may be improved by selectively using an interpolation filter that matches a characteristic of a video sequence based on a candidate list including a plurality of interpolation filter candidates.

According to the present disclosure, an interpolation filter that better matches a characteristic of a video sequence may be selected by using interpolation filter candidates with various filter types and filter lengths.

According to the present disclosure, signaling of an unnecessary flag may be removed and the complexity of an operation may be controlled by limiting a signaling/derivation condition of a flag for adaptively using an adaptive interpolation filter technique.

According to the present disclosure, encoding efficiency of inter prediction may be improved by considering or reusing information about a candidate list or an interpolation filter used in a pre-encoded/decoded picture, slice or block in a subsequent encoding/decoding process.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an inter prediction method performed by a decoding apparatus 300 as an embodiment according to the present disclosure.

FIG. 5 shows a schematic configuration of an inter predictor 332 that performs an inter prediction method according to the present disclosure.

FIG. 6 shows an inter prediction method performed by an encoding apparatus 200 as an embodiment according to the present disclosure.

FIG. 7 shows a schematic configuration of an inter predictor 221 that performs an inter prediction method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (WC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

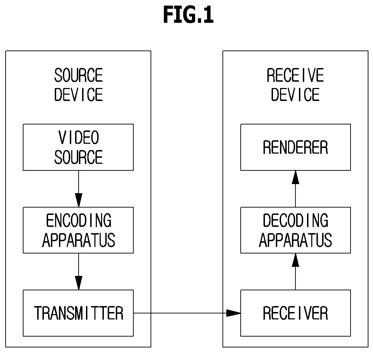

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

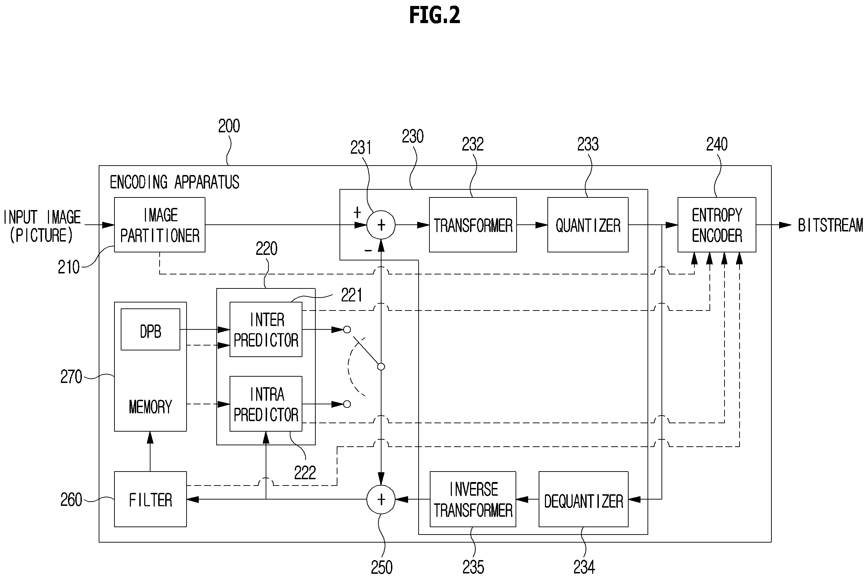

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

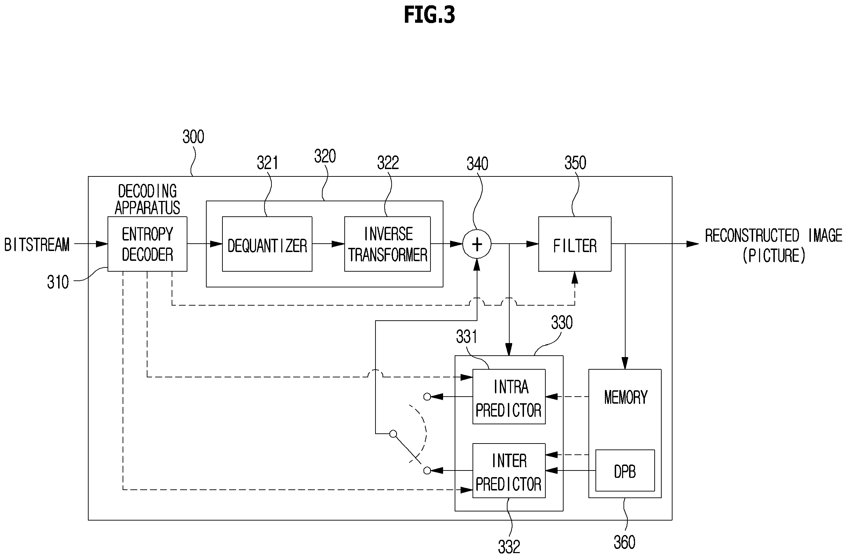

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

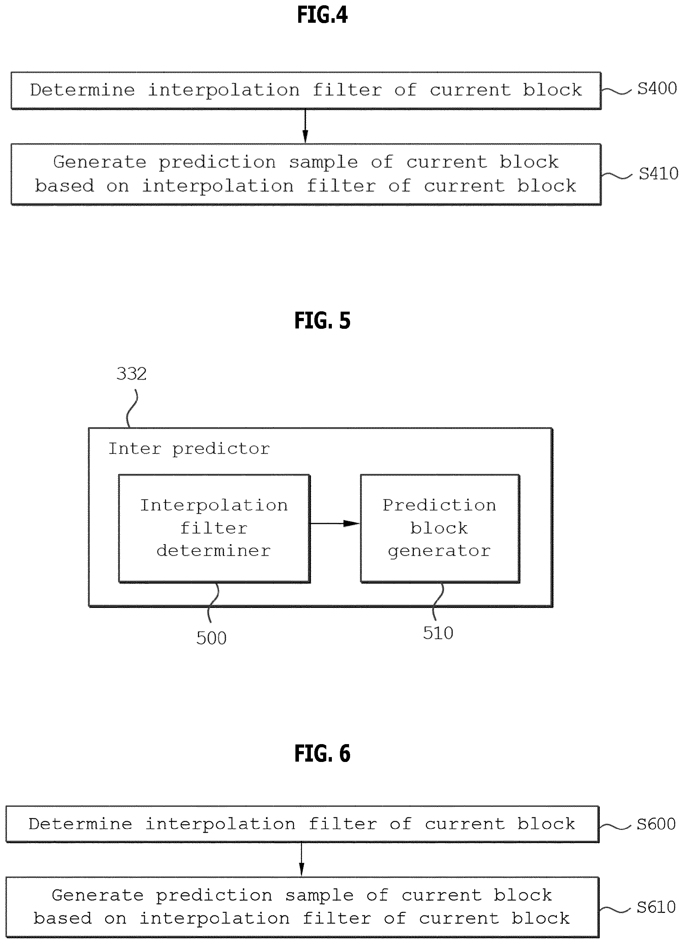

FIG. 4 shows an inter prediction method performed by a decoding apparatus 300 as an embodiment according to the present disclosure.

Referring to FIG. 4, an interpolation filter of a current block may be determined S400.

An interpolation filter of a current block may be derived from a candidate list including a plurality of interpolation filter candidates pre-defined in a decoding apparatus. A filter type of the plurality of pre-defined interpolation filter candidates may include at least one of a DCT-based interpolation filter (DCT-IF), a Gaussian interpolation filter (Gaussian IF), or a sharpening interpolation filter (Sharpening IF). Even with the same filter type, an interpolation filter with a different number of filter taps and/or a different filter coefficient may be included in a candidate list.

Specifically, a candidate list may include at least one of a 8-tap DCT-IF, a 12-tap DCT-IF, a 8-tap Gaussian interpolation filter or a 12-tap Gaussian interpolation filter. As an example, the candidate list may be defined as in Table 1 below.

Table 1]

| Idx | Interpolation Filter Candidate |
| --- | --- |
| 0 | DCT-IF, 8-tap |

(continued)

| Idx | Interpolation Filter Candidate |
|---|---|
| 1 | DCT-IF, 12-tap |
| 2 | Gaussian Interpolation Filter, 8-tap |
| 3 | Gaussian Interpolation Filter, 12-tap |

Table 1 defines an interpolation filter candidate for each index (Idx). However, an index in Table 1 is only for distinguishing an interpolation filter candidate, and it does not limit a position of an interpolation filter candidate corresponding to an index. In other words, a position of an interpolation filter candidate within a candidate list may be different from Table 1. In addition, the candidate list may further include at least one of a 4-tap DCT-IF, a 4-tap Gaussian interpolation filter, a 16-tap DCT-IF, a 16-tap Gaussian interpolation filter, a 4-tap sharpening interpolation filter, a 8-tap sharpening interpolation filter, a 12-tap sharpening interpolation filter, or a 16-tap sharpening interpolation filter.

Hereinafter, a method for determining an interpolation filter of a current block based on the candidate list will be described in detail.

<u>Cost-based Determination Method</u>

In terms of a decoding apparatus, a cost may be calculated for each interpolation filter candidate belonging to a candidate list. Among the costs calculated based on the interpolation filter candidates, one interpolation filter candidate with the minimum cost may be selected. The selected interpolation filter candidate may be set as an interpolation filter of a sd c current block.

Here, a cost may be calculated for all interpolation filter candidates belonging to a candidate list, or a case may be calculated only for N top interpolation filter candidates belonging to a candidate list. N is an integer of 2, 3, 4 or more, and may be smaller than the total number of interpolation filter candidates belonging to a candidate list.

The cost may be calculated as the sum of absolute difference (SAD) between one or more samples in a template region of a current block and one or more samples in a template region of a reference block.

Specifically, when a current block is encoded by unidirectional prediction, a current block may have a reference block in any one of an L0 direction or an L1 direction. In this case, a SAD may be calculated based on a template region adjacent to a reference block in an L0 or L1 direction and a template region adjacent to a current block. Samples in the template region may be generated by applying a corresponding interpolation filter candidate to reconstructed samples of a reference picture.

Alternatively, when a current block is encoded by bidirectional prediction, a current block may have a reference block in an L0 direction and a reference block in an L1 direction. In this case, a SAD may be calculated based on a template region adjacent to a reference block in an L0 direction, a template region adjacent to a reference block in an L1 direction and a template region adjacent to a current block. Samples of template regions in the L0 and L1 directions may be generated by applying a corresponding interpolation filter candidate to reconstructed samples of reference pictures in L0 and L1 directions, respectively. As an example, the SAD may be calculated as in Equation 1 below.

$$[\text{Equation 1}]$$
$$tP = (tP0 + tP1 + \text{offset}) >> (\text{shift})$$
$$SAD = \sum |tC - tP|$$

In Equation 1, tP0 and tP1 may represent a sample value of a template region in an L0 direction and a sample value of a template region in an L1 direction, respectively, and tC may represent a sample value of a template region of a current block. Offset and shift may be set as 1, respectively.

Alternatively, when a weighted sum is applied between reference blocks in L1 and L1 directions, a weight for the weighted sum may be applied equally to tP0 and tP1, and offset and shift may be set based on the sum of weights. As an example, when the sum of weights is 16, offset may be set as $(1 <<(1+3))$ and shift may be set as $(1+4)$.

As described above, a final template region may be generated through an average or a weighted sum between a sample value of a template region in an L0 direction and a sample value of a template region in an L1 direction, and a SAD between a template region of a current block and a final template region may be calculated.

The SAD may be modified and applied in various ways such as a Mean Reduced SAD (MRSAD), a High-frequency removed SAD, etc. More specifically, a MRSAD may be calculated as in Equation 2 below.

[Equation 2]

$$tP = (tP0 + tP1 + offset) >> shift$$
$$delta = (\sum (tC - tP)) / (W \times H)$$
$$SAD = \sum | (tC - tP) - delta |$$

in Equation 2, tP0, tP1, tC, offset and shift are the same as described in Equation 1, and an overlapping description is omitted here. W and H may represent a width and a height of a template region used to calculate a cost, respectively.

In addition, a high-frequency removed SAD may be calculated as in Equation 3 below.

[Equation 3]

$$tmp = (2 * tC) - tP0 - tP1$$
$$SAD = \sum | tmp |$$

In Equation 3, tP0, tP1 and tc are the same as described in Equation 1, and an overlapping description is omitted here.

Alternatively, even when a current block is encoded by bidirectional prediction, a SAD may be calculated based on a template region adjacent to a reference block in any one of an L0 or L1 direction and a template region adjacent to a current block. Any one of the L0 or L1 direction may be a direction that is pre-defined equally for an encoding apparatus and a decoding apparatus.

A template region for calculating the cost may be a neighboring region adjacent to a current block and/or a reference block. As an example, the template region may include at least one of a top neighboring region, a left neighboring region, a top-left neighboring region, a bottom-left neighboring region or a top-right neighboring region.

The template region may be a region that is pre-defined equally for an encoding apparatus and a decoding apparatus to calculate the cost. Alternatively, the template region may be variably determined based on information specifying a position of the template region. In this case, information specifying a position of a template region may be signaled through a bitstream. Alternatively, a position and/or a size of a template region may be determined based on at least one of whether a current block is positioned on a boundary of at least one of a picture, a slice, a tile or a coding tree unit, a size of a current block (e.g., a width, a height, a ratio of a width and a height, a product of a width and a height), a shape of a current block, a division type of a current block, a prediction mode of a neighboring region or the availability of a neighboring region.

As an example, when a current block is positioned at a top boundary of a coding tree unit, at least one of a top neighboring region, a top-left neighboring region or a top-right neighboring region of a current block may not be referred to for calculating a cost. When a width of a current block is greater than a height, a top neighboring region may be referred to for calculating a cost, and a left neighboring region may not be referred to for calculating a cost. Conversely, when a width of a current block is smaller than a height, a left neighboring region may be referred to for calculating a cost, and a top neighboring region may not be referred to for calculating a cost. When a current block is generated through horizontal block division, a top neighboring region may not be referred to for calculating a cost. Conversely, when a current block is generated through vertical block division, a left neighboring region may not be referred to for calculating a cost. When a neighboring region of a current block is encoded in an intra mode, a corresponding neighboring region may not be referred to for calculating a cost. However, it is not limited thereto, and a corresponding neighboring region may be referred to for calculating a cost regardless of a prediction mode of a neighboring region.

The template region may be configured with M sample lines. Here, M may be an integer of 1, 2, 3, 4 or more. The number of sample lines configuring a template region may be the same regardless of a position of a neighboring region described above, or may be different according to a position of a neighboring region. A cost may be calculated based on all samples belonging to the template region. Alternatively, a cost may be calculated by using only a sample line at a predetermined position within the template region. Alternatively, a cost may be calculated based on all or some samples belonging to a sample line at the predetermined position. A position of a sample line and/or a sample used for cost calculation within the template region may be determined based on at least one of whether a current block is positioned on a boundary of a picture, a slice, a tile or a coding tree unit, a size of a current block, a shape of a current block, a division type of a current block, a prediction mode of a neighboring region or the availability of a neighboring region. Alternatively, information for specifying a position of a sample line for the cost calculation may be signaled through a bitstream.

Reordered candidate list and index information-based determination method

In terms of a decoding apparatus, a cost may be calculated for each interpolation filter candidate belonging to a candidate list. The cost is the same as described in the above-described 'cost-based determination method', and a detailed description is omitted here.

Interpolation filter candidates belonging to a candidate list may be reordered in ascending order of calculated costs. An interpolation filter of a current block may be determined based on a reordered candidate list and index information. The index information is encoded based on a reordered candidate list, and may be signaled through a bitstream. The index information may indicate any one of interpolation filter candidates in a reordered candidate list.

As an example, it is assumed that a candidate list includes three interpolation filter candidates, i.e., first to third interpolation filter candidates, and index 0 to 2 are allocated to first to third interpolation filter candidates, respectively.

Costs of cost0 to cost2 may be calculated for first to third interpolation filter candidates, respectively. In this case, it is assumed that when calculated costs are ordered in ascending order, they are ordered in the order of cost1, cost2 and cost0. In this case, if interpolation filter candidates are reordered in ascending order of costs, the candidate list may be reordered in the order of a second interpolation filter candidate, a third interpolation filter candidate and a first interpolation filter candidate. In other words, an index of 0 may be allocated to a second interpolation filter candidate, an index of 1 may be allocated to a third interpolation filter candidate, and an index of 2 may be allocated to a first interpolation filter candidate.

A value of the index information is an integer in the range of 0 to 2, and an interpolation filter candidate indicated by the index information may be set as an interpolation filter of a current block. In other words, when a value of the index information is 0, a second interpolation filter candidate to which an index of 0 is allocated in a reordered candidate list may be set as an interpolation filter of a current block. Alternatively, when a value of the index information is 1, a third interpolation filter candidate to which an index of 1 is allocated in a reordered candidate list may be set as an interpolation filter of a current block. Alternatively, when a value of the index information is 2, a first interpolation filter candidate to which an index of 2 is allocated in a reordered candidate list may be set as an interpolation filter of a current block.

Alternatively, it is assumed that a candidate list includes five interpolation filter candidates, i.e., first to fifth interpolation filter candidates, and index 0 to 4 are allocated to first to fifth interpolation filter candidates, respectively.

Costs of cost0 to cost4 may be calculated for first to fifth interpolation filter candidates, respectively. In this case, it is assumed that when calculated costs are ordered in ascending order, they are ordered in the order of cost1, cost2, cost0, cost3, and cost4. In this case, if interpolation filter candidates are reordered in ascending order of the costs, the candidate list may be reordered in the order of a second interpolation filter candidate, a third interpolation filter candidate, a first interpolation filter candidate, a fourth interpolation filter candidate and a fifth interpolation filter candidate. In other words, an index of 0 may be allocated to a second interpolation filter candidate, an index of 1 may be allocated to a third interpolation filter candidate, an index of 2 may be allocated to a first interpolation filter candidate, an index of 3 may be allocated to a fourth interpolation filter candidate and an index of 4 may be allocated to a fifth interpolation filter candidate.

The index information may be encoded for N top interpolation filter candidates belonging to a reordered candidate list. When N is 3, a value of index information is an integer in the range of 0 to 2, and may indicate any one of three top interpolation filter candidates belonging to a reordered candidate list. An interpolation filter candidate indicated by the index information may be set as an interpolation filter of a current block. However, it is just an example, and N may be 2 or 4.

Alternatively, each cost may be calculated for N top interpolation filter candidates among the five interpolation filter candidates belonging to the candidate list, and a cost may not be calculated for the remaining interpolation filter candidates. Hereinafter, for convenience of a description, it is assumed that N is 3, but the present disclosure is not limited thereto, and N may be 2 or 4.

Costs of cost0 to cost2 may be calculated for top three interpolation filter candidates, i.e., first to third interpolation filter candidates. In this case, it is assumed that when calculated costs are ordered in ascending order, they are ordered in the order of cost1, cost2 and cost0. In this case, if interpolation filter candidates are reordered in ascending order of the costs, the candidate list may be reordered in the order of a second interpolation filter candidate, a third interpolation filter candidate, a first interpolation filter candidate, a fourth interpolation filter candidate and a fifth interpolation filter candidate.

The index information may be encoded for N top interpolation filter candidates that a cost is calculated. When N is 3, a value of index information is an integer in the range of 0 to 2, and may indicate any one of three top interpolation filter candidates belonging to a reordered candidate list. An interpolation filter candidate indicated by the index information may be set as an interpolation filter of a current block.

Index information-based determination method

Index information in this embodiment may be encoded based on an index of a candidate list that is pre-defined equally for an encoding apparatus and a decoding apparatus, not a reordered candidate list. In this case, a process of calculating a cost for each interpolation filter candidate belonging to the candidate list and a process of reordering interpolation filter candidates of a candidate list based on a calculated cost may be omitted. The index information may indicate any one of a plurality of interpolation filter candidates belonging to a candidate list. An interpolation filter candidate indicated by the index information may be set as an interpolation filter of a current block.

An interpolation filter of a current block may be determined by selectively using any one of a plurality of determination methods pre-defined in a decoding apparatus. The plurality of pre-defined determination methods may include at least one of a cost-based determination method, a reordered candidate list and index information-based determination method or an index information-based determination method that are described above. For the selective use, information specifying any one of a plurality of determination methods may be used. Here, the information may be explicitly signaled through a bitstream, or may be implicitly derived based on a parameter of a current block. The parameter may include at least one of a position, a size, a shape, a division type, a component type, an inter prediction mode type or whether a block is encoded by bidirectional prediction.

An interpolation filter determined through the above-described method may be equally applied to generate a reference block in an L0 direction of a current block and a reference block in an L1 direction. Alternatively, as described later, each interpolation filter may be determined for each reference picture list, and even in this case, the above-described method may be applied in the same/similar manner, and an overlapping description is omitted. Here, a reference picture list may include reference picture list 0 (L0) and reference picture list 1 (L1).

Cost-based Determination Method

For each of L0 and L1 directions, costs corresponding to interpolation filter candidates belonging to a candidate list may be calculated, respectively. Specifically, for an L0 direction, a cost may be calculated based on a template region adjacent to a reference block in an L0 direction and a template region adjacent to a current block. An interpolation filter candidate with the minimum cost among the calculated costs may be set as an interpolation filter for generating a reference block in an L0 direction of a current block. Likewise, for an L1 direction, a cost may be calculated based on a template region adjacent to a reference block in an L1 direction and a template region adjacent to a current block. An interpolation filter candidate with the minimum cost among the calculated costs may be set as an interpolation filter for generating a reference block in an L1 direction of a current block. Through this, a different interpolation filter may be used for an L0 direction and an L1 direction of a current block.

The cost may be defined as a SAD as described above, and may be calculated as in Equation 4 below. However, it is just an example, and may be modified and applied in various ways such as a Mean Reduced SAD (MRSAD), a High-frequency removed SAD, etc. described above.

$$[\text{Equation 4}]$$
$$SAD\_L0 = \sum | tC - tP0 |$$
$$SAD\_L1 = \sum | tC - tP1 |$$

In Equation 4, SAD_L0 and SAD_L1 represent a SAD in an L0 direction and a SAD in an L1 direction, respectively. tP0 represents a sample value of a template region in an L0 direction, and tP1 represents a sample value of a template region in an L1 direction. tC represents a sample value of a template region of a current block.

Alternatively, an interpolation filter for an L1 direction may be determined based on an interpolation filter in an L0 direction pre-determined through the above-described method. As an example, as in Equation 5 below, a modified sample value (tmp) of a template region of a current block may be calculated based on a sample value (tC) of a template region of a current block and a sample value (tP0) of a template region in an L0 direction. Here, tP0 may be generated based on a pre-determined interpolation filter in an L0 direction. Based on a difference between the modified sample value (tmp) and a sample value (tP1) of a template region in an L1 direction, a SAD in an L1 direction (SAD_L1) may be calculated. A sample value (tP1) of a template region in an L1 direction may be calculated for each interpolation filter candidate belonging to a candidate list. Likewise, a SAD in an L1 direction (SAD_L1) is also calculated for each of interpolation filter candidates belonging to a candidate list, and among them, an interpolation filter candidate with the minimum value of SAD_L1 may be set as an interpolation filter in an L1 direction of a current block.

$$[\text{Equation 5}]$$
$$tmp = (2tC - tP0)$$
$$SAD\_L1 = \sum | tmp - tP1 |$$

Alternatively, for an L0 direction, costs corresponding to interpolation filter candidates belonging to a candidate list may be calculated respectively, and among them, an interpolation filter candidate with the minimum cost may be set as an interpolation filter in an L0 direction of a current block. Meanwhile, interpolation filter candidates in a candidate list may be reordered in ascending order of costs calculated for an L0 direction. For an L1 direction, costs corresponding to N top interpolation filter candidates in the reordered candidate list may be calculated, and a cost may not be calculated for the remaining interpolation filter candidates. An interpolation filter candidate with the minimum cost among the costs corresponding to N top interpolation filter candidates may be set as an interpolation filter in an L1 direction of a current block.

Reordered candidate list and index information-based determination method

As described above, for each of L0 and L1 directions, costs corresponding to all or some of the interpolation filter candidates belonging to a candidate list may be calculated, respectively.

Interpolation filter candidates belonging to a candidate list may be reordered in ascending order of costs calculated for an L0 direction. Likewise, interpolation filter candidates belonging to a candidate list may be reordered in ascending order of costs calculated for an L1 direction.

An interpolation filter of a current block may be determined based on a reordered candidate list and index information. The index information is encoded based on a reordered candidate list, and may be signaled through a bitstream. The index information may indicate any one of interpolation filter candidates in a reordered candidate list.

As an example, the index information may be signaled for an L0 direction and an L1 direction, respectively. In other words, an interpolation filter in an L0 direction may be determined based on a candidate list reordered for an L0 direction and index information in an L0 direction. Here, index information in an L0 direction is encoded based on an index of a reordered candidate list for an L0 direction, and may indicate any one of interpolation filter candidates in a reordered candidate list for an L0 direction. Likewise, an interpolation filter in an L1 direction may be determined based on a candidate list reordered for an L1 direction and index information in an L1 direction. Here, index information in an L1 direction is encoded based on an index of a reordered candidate list for an L1 direction, and may indicate any one of interpolation filter candidates in a reordered candidate list for an L1 direction.

Alternatively, the index information may indicate any one of index sets pre-defined in a decoding apparatus. Each index set may be configured with an index indicating an interpolation filter in an L0 direction and an index indicating an interpolation filter in an L1 direction. Here, index information may be encoded based on an index of a reordered candidate list. When a candidate list is configured with three interpolation filter candidates, the index sets may be defined as in Table 2 below.

[Table 2]

| Idx | 0 | 1 | 2 | 3 | 4 | 5 | 6 | 7 | 8 |
|-----|---|---|---|---|---|---|---|---|---|
| CandIdx_L0 | 0 | 0 | 1 | 1 | 0 | 1 | 2 | 2 | 2 |
| CandIdx_L1 | 0 | 1 | 0 | 1 | 2 | 2 | 0 | 1 | 2 |

Referring to Table 2, Idx may refer to index information, and CandIdx_L0 and CandIdx_L1 may refer to an index indicating an interpolation filter in an L0 direction and an index indicating an interpolation filter in an L1 direction, respectively. When a candidate list is configured with three interpolation filter candidates, up to nine index sets may be defined. Any one of nine index sets may be indicated based on the index information, and based on a reordered candidate list for each of L0 and L1 directions and the indicated index set, an interpolation filter may be determined for each of L0 and L1 directions of a current block.

For example, when a value of signaled index information is 1, an index set of (0,1) may be selected. In this case, an interpolation filter candidate with an index of 0 in a reordered candidate list for an L0 direction may be set as an interpolation filter in an L0 direction of a current block, and an interpolation filter candidate with an index of 1 in a reordered candidate list for an L1 direction may be set as an interpolation filter in an L1 direction of a current block.

Index information-based determination method

Index information may be signaled for each of L0 and L1 directions of a current block. Index information in this embodiment may be encoded based on an index of a candidate list that is pre-defined equally for an encoding apparatus and a decoding apparatus, not a reordered candidate list. In this case, for each of L0 and L1 directions, a process of calculating costs corresponding to interpolation filter candidates belonging to the candidate list and a process of reordering interpolation filter candidates of a candidate list based on calculated costs may be omitted.

Specifically, an interpolation filter in an L0 direction may be determined based on a pre-defined candidate list and index information in an L0 direction. Here, index information in an L0 direction may indicate any one of interpolation filter candidates in a pre-defined candidate list. As an example, an interpolation filter candidate with an index of the same value as index information in the L0 direction may be set as an interpolation filter in an L0 direction of a current block.

Likewise, an interpolation filter in an L1 direction may be determined based on a pre-defined candidate list and index information in an L1 direction. Here, index information in an L1 direction may indicate another one of interpolation filter candidates in a pre-defined candidate list. As an example, an interpolation filter candidate with an index of the same value as index information in the L1 direction may be set as an interpolation filter in an L1 direction of a current block. However, when a value of index information in an L1 direction is greater than or equal to a value of index information in an L0 direction, an interpolation filter candidate corresponding to a value obtained by adding 1 to a value of index information in an L1 direction may be set as an interpolation filter in an L1 direction of a current block.

An interpolation filter of a current block may be adaptively determined based on the candidate list, which is referred to as an adaptive interpolation filter technique below. An adaptive interpolation filter technique may be used adaptively based on a predetermined variable (UseAdaptiveFilter). Here, UseAdaptiveFilter may represent whether an adaptive interpolation filter technique is used for a current block. As an example, when UseAdaptiveFilter is 1, an adaptive interpolation filter technique may be used for a current block. In this case, an interpolation filter of a current block may be determined based on a candidate list through the above-described method. On the other hand, when UseAdaptiveFilter is 0, an adaptive interpolation filter technique may not be used for a current block. In this case, an interpolation filter of a current block may be determined as a default interpolation filter that is pre-defined equally for an encoding apparatus and a decoding apparatus. The default interpolation filter may be any one of the interpolation filter candidates belonging to the candidate list. As an example, a default interpolation filter may be the same as an interpolation filter candidate with an index of 0 in a candidate list. Alternatively, the default interpolation filter may be defined separately from a candidate list, and it may not belong to interpolation filter candidates of a candidate list.

UseAdaptiveFilter may be derived based on flag information (adaptive_filter_flag) signaled in a unit of a coding unit (CU). As an example, when a value of adaptive_filter_flag is 1, UseAdaptiveFilter may be derived as 1, and when a value of adaptive_filter_flag is 0, UseAdaptiveFilter may be derived as 0.

The adaptive_filter_flag may be signaled through a bitstream when a predetermined condition is satisfied. The predetermined condition may include at least one of conditions 1 to 4 described later. There may be a limit that the adaptive_filter_flag is signaled when all of the predetermined conditions are satisfied, or the adaptive_filter_flag may be signaled when any one of the predetermined conditions is satisfied.

The adaptive_filter_flag may be signaled based on whether an adaptive interpolation filter technique is allowed (Condition 1). Whether an adaptive interpolation filter technique is allowed may be determined based on a flag signaled in a unit of at least one of a video sequence, a picture, a sub-picture, a slice or a coding tree unit. When an adaptive interpolation filter technique is allowed according to the flag, adaptive_filter_flag may be signaled, and otherwise, adaptive_filter_flag may not be signaled.

As an example, adaptive_filter_flag may be signaled as in Table 3 below.

[Table 3]

| if( sps_adaptive_filter_enabled_flag ) | |
|---|---|
| **adaptive_if_flag**[ x0 ][ y0 ] | ae(v) |

Referring to Table 3, sps_adaptive_filter_enabled_flag may represent whether an adaptive interpolation filter technique is allowed for a video sequence. Alternatively, sps_adaptive_filter_enabled_flag may also represent whether adaptive_if flag exists in a coding unit syntax. According to Table 3, when sps_adaptive_filter_enabled_flag is 1, adaptive_if flag may be signaled, and when sps_adaptive_filter_enabled_flag is 0, adaptive_if_flag may not be signaled. When adaptive_if flag is not signaled, adaptive_if flag may be derived as 0.

The adaptive_filter_flag may be signaled based on whether a predetermined quantization parameter is greater than a threshold value (Condition 2). The quantization parameter may refer to a quantization parameter (SliceQpY) of a slice to which a current block belongs. Alternatively, the quantization parameter may refer to a quantization parameter of a current block, which is a coding unit or a quantization parameter of a block decoded before a current block. The threshold value may be a value that is pre-defined equally for an encoding apparatus and a decoding apparatus. When the quantization parameter is less than or equal to a threshold value, adaptive_if flag may be signaled, and when the quantization parameter is greater than a threshold value, adaptive_if flag may not be signaled. When the adaptive_if flag is not signaled, adaptive_if flag may be derived as 0.

As an example, adaptive_filter_flag may be signaled as in Table 4 below.

[Table 4]

| if(SliceQp$_Y$ <= 33) | |
|---|---|
| **adaptive_if_flag** [ x0 ][ y0 ] | ae(v) |

Referring to Table 4, adaptive_if_flag may be signaled based on a quantization parameter (SliceQpY) of a slice to which a current block belongs. In other words, when SliceQpY is less than or equal to 33, adaptive_if flag may be signaled, and when SliceQpY is greater than 33, adaptive_if flag may not be signaled. A threshold value of 33 in Table 4 is just an example, and a threshold value of 28, 38 or 43 may also be used.

The adaptive_filter_flag may be signaled based on whether a size of a current block is smaller than a threshold size (Condition 3). Here, a size of a current block may be expressed as at least one of a width, a height, the sum of a width and a height, the product of a width and a height, the minimum value/the maximum value of a width and a height or a ratio of a width and a height of a current block. The threshold size may be a size that is pre-defined equally for an encoding apparatus and a decoding apparatus. The threshold size may be an integer of 16, 32, 64, 128, 256 or more. When a size of the current block is greater than or equal to a threshold size, adaptive_filter_flag may be signaled, and when a size of the current block is less than a threshold size, adaptive_filter_flag may not be signaled. When the adaptive_filter_flag is not signaled, adaptive_filter_flag may be derived as 0.

As an example, adaptive_filter_flag may be signaled as in Table 5 below.

[Table 5]

| if(cbWidth * cbHeight  >=  256 ) | |
|---|---|
| **adaptive_if_flag** [ x0 ][ y0 ] | ae(v) |

Referring to Table 5, cbWidth and cbHeight may represent a width and a height of a current block, respectively. When the product of a width and a height of a current block is greater than or equal to a threshold size of 256, adaptive_filter_flag may be signaled, and when the product of a width and a height of a current block is less than a threshold size of 256, adaptive_filter_flag may not be signaled. Alternatively, when a width and a height of a current block are greater than or equal to a threshold size of 16, adaptive_filter_flag may be signaled, and when any one of a width and a height of a current block is smaller than a threshold size of 16, adaptive_filter_flag may not be signaled.

The adaptive_filter_flag may be signaled based on whether an inter prediction mode of a current block is a pre-set mode (Condition 4). Here, a pre-set mode may be at least one of a merge mode, an AMVP mode, an affine merge mode, an affine AMVP mode, or a sub-block-based merge mode. When an inter prediction mode of the current block corresponds to a pre-set mode, adaptive_filter_flag may be signaled, and otherwise, adaptive_filter_flag may not be signaled. When the adaptive_filter_flag is not signaled, adaptive_filter_flag may be derived as 0.

As an example, adaptive_filter_flag may be signaled as in Table 6 below.

[Table 6]

| if(inter_affine_flag[ x0 ][ y0 ] == 0) | |
|---|---|
| **adaptive_if_flag** [ x0 ][ y0 ] | ae(v) |

In Table 6, inter_affine_flag may indicate whether an inter prediction mode of a current block is an affine AMVP mode (i.e., whether affine model-based motion compensation is used for a current block). As an example, when inter_affine_flag is 0, it may represent that an inter prediction mode of a current block is not an affine AMVP mode. In this case, an inter prediction mode of a current block may be a merge mode, an AMVP mode, an affine merge mode or a sub-block-based merge mode. On the other hand, when inter_affine_flag is 1, it may represent that an inter prediction mode of a current block is an affine AMVP mode. Referring to Table 6, when inter_affine_flag is 0, adaptive_filter_flag may be signaled, and when inter_affine_flag is 1, adaptive_filter_flag may not be signaled.

The UseAdaptiveFilter may be implicitly derived based on whether a predetermined condition is satisfied without signaling adaptive_filter_flag. Here, a predetermined condition may include at least one of conditions 1 to 4 described above. As an example, UseAdaptiveFilter may be derived as 1 when all of the predetermined conditions are satisfied and may be derived as 0 when any one of the predetermined conditions is not satisfied. Alternatively, UseAdaptiveFilter may be derived as 1 when any one of the predetermined conditions is satisfied and may be derived as 0 when all of the predetermined conditions are not satisfied.

Alternatively, whether to use an adaptive interpolation filter technique may be determined in a unit of a picture and/or a slice. For this purpose, at least one of pic adaptive_if flag in a unit of a picture or slice adaptive_if flag in a unit of a slice may be signaled. Here, pic adaptive_if flag may indicate whether an adaptive interpolation filter technique is used for a picture to which a current block belongs, and slice adaptive_if flag may indicate whether an adaptive interpolation filter technique is used for a slice to which a current block belongs.

As an example, when pic adaptive_if flag is 1, it may represent that an adaptive interpolation filter technique is used for all coding blocks belonging to the picture and when pic adaptive_if flag is 0, it may represent that an adaptive interpolation filter technique is not used for at least one coding block belonging to the picture. Alternatively, when pic adaptive_if flag is 1, it may represent that an adaptive interpolation filter technique is used for at least one coding block belonging to the picture, and when pic adaptive_if flag is 0, it may represent that an adaptive interpolation filter technique is not used for all coding blocks belonging to the picture.

As an example, when slice adaptive_if flag is 1, it may represent that an adaptive interpolation filter technique is used for all coding blocks belonging to the slice, and when slice adaptive_if flag is 0, it may represent that an adaptive interpolation filter technique is not used for at least one coding block belonging to the slice. Alternatively, when slice adaptive_if flag is 1, it may represent that an adaptive interpolation filter technique is used for at least one coding block belonging to the slice, and when slice adaptive_if flag is 0, it may represent that an adaptive interpolation filter technique is not used for all coding blocks belonging to the slice.

The pic adaptive_if flag and/or slice adaptive_if flag may be signaled when an adaptive interpolation filter technique is allowed for a video sequence according to sps_adaptive_filter_enabled_flag described in Table 3.

Even when the pic adaptive_if flag or slice adaptive_if flag indicates that an adaptive interpolation filter technique is used, whether an adaptive interpolation filter technique is used for each coding block may be determined. Here, whether to use an adaptive interpolation filter technique may be determined based on the above-described UseAdaptiveFilter. UseAdaptiveFilter, as described above, may be derived based on adaptive_filter_flag signaled explicitly, or may be implicitly derived based on whether a predetermined condition is satisfied. A condition here may include at least one of conditions 2 to 4 described above.

For the existing video codec, adaptive motion vector resolution (AMVR) is applied and a separate interpolation filter is used in response to a case in which a phase is half-pel, but an adaptive interpolation filter technique according to the present disclosure may be applied regardless of whether adaptive motion vector resolution is used and/or whether a phase is half-pel.

The above-described candidate list may be any one selected from a plurality of candidate lists that are pre-defined equally for an encoding apparatus and a decoding apparatus. The number of candidate lists pre-defined in a decoding apparatus is L, and each candidate list may include M interpolation filter candidates. Here, L may be an integer of 2, 3, 4 or more, and M may be an integer of 1, 2, 3, 4 or more. Pre-defined candidate lists may include the same number of interpolation filter candidates. Alternatively, the number of interpolation filter candidates belonging to any one of the pre-defined candidate lists may be different from the number of interpolation filter candidates belonging to another of the pre-defined candidate lists.

As an example, pre-defined candidate lists may include three candidate lists, i.e., a first candidate list, a second candidate list, and a third candidate list. Here, a first candidate list may include at least one of a 8-tap Gaussian interpolation filter, a 12-tap Gaussian interpolation filter, a 8-tap sharpening interpolation filter, or a 12-tap sharpening interpolation filter. A second candidate list may include at least one of a 8-tap DCT-IF, a 12-tap DCT-IF, a 8-tap sharpening interpolation filter, or a 12-tap sharpening interpolation filter. A third candidate list may include at least one of a 8-tap DCT-IF, a 12-tap DCT-IF, a 8-tap Gaussian interpolation filter, or a 12-tap Gaussian interpolation filter. However, it is just an example and is not limited thereto. In other words, at least one of the interpolation filter candidates of a first candidate list may have a filter length of 4-tap, 6-tap, 10-tap, 14-tap, or 16-tap. At least one of the interpolation filter candidates of a second candidate list may have a filter length of 4-tap, 6-tap, 10-tap, 14-tap, or 16-tap. At least one of the interpolation filter candidates of a third candidate list may have a filter length of 4-tap, 6-tap, 10-tap, 14-tap, or 16-tap. Alternatively, one candidate list may include interpolation filter candidates with the same filter length, and may not include interpolation filter candidates with a different filter length. One candidate list may include interpolation filter candidates with the same filter type and may not include interpolation filter candidates with a different filter type.

Table 7 below shows a case in which the number of pre-defined candidate lists is 3 and candidate lists include 4 interpolation filter candidates. According to Table 7, each candidate list may include a heterogeneous filter type and may include interpolation filter candidates of the same filter type with a different filter length.

[Table 7]

| Idx | First Candidate List | Second Candidate List | Third Candidate List |
| --- | --- | --- | --- |
| 0 | Gaussian IF, 8-tap | DCT-IF, 8-tap | DCT-IF, 8-tap |
| 1 | Gussian IF, 12-tap | DCT-IF, 12-tap | DCT-IF, 12-tap |
| 2 | Sharpening IF, 8-tap | Sharpening IF, 8-tap | Gaussian IF, 8-tap |
| 3 | Sharpening IF, 12-tap | Sharpening IF, 12-tap | Gussian IF, 12-tap |

In a unit of a picture and/or a slice, based on a flag representing whether an adaptive interpolation filter technique is used, index information specifying any one of the plurality of pre-defined candidate lists may be signaled. As an example, when an adaptive interpolation filter technique is used for a corresponding picture according to pic adaptive_if flag, the index information may be additionally signaled. Alternatively, when an adaptive interpolation filter technique is used for a corresponding slice according to slice adaptive_if flag, the index information may be additionally signaled. One candidate list specified based on the index information may be shared by coding blocks belonging to a corresponding picture or slice.

One index information integrating a flag representing whether the adaptive interpolation filter technique is used and the index information may be signaled. As an example, when a value of index information is 0, a candidate list configured with a default interpolation filter (hereinafter, referred to as a default candidate list) may be selected. The default candidate list may be any one of a plurality of pre-defined candidate lists described above. The default candidate list is defined separately from a plurality of pre-defined candidate lists, and may not belong to a plurality of pre-defined candidate lists. On the other hand, when a value of index information is greater than 0, a candidate list corresponding to the index information may be selected among the plurality of pre-defined candidate lists.

Based on at least one of whether a picture and/or a slice is a P slice, whether a picture and/or a slice is a B slice, or a distance between a current picture and a reference picture, any one of a plurality of pre-defined candidate lists may be implicitly determined. As an example, when a distance between a current picture and a reference picture is greater than a threshold distance that is pre-defined equally for an encoding apparatus and a decoding apparatus, a third candidate list may be selected, and otherwise, a second candidate list may be selected. Here, a distance between a current picture and a reference picture may be defined as a POC difference (diffPOC) between a current picture and a reference picture. The diffPOC may be defined as at least one of a first POC difference between a current picture and a reference picture in an L0 direction, a second POC difference between a current picture and a reference picture in an L1 direction, the minimum value of a first POC difference and a second POC difference, or the maximum value of a first POC difference and a second POC difference. The threshold distance may be an integer of 2, 3, 4, or more.

Based on a quantization parameter of a picture and/or a slice, any one of a plurality of pre-defined candidate lists may be implicitly determined. As an example, when a quantization parameter (sliceQP) of a slice to which a current block belongs is smaller than a predetermined threshold value, a first candidate list may be selected, and otherwise, a second candidate list may be selected.

In a unit of a coding unit, any one of a plurality of pre-defined candidate lists may be selectively used. To this end, in a unit of a coding unit, index information specifying any one of a plurality of pre-defined candidate lists may be signaled. Here, a coding unit may refer to a coding unit that is no longer divided into smaller coding units (i.e., a current block), a coding tree unit to which a current block belongs, or a coding unit having a predetermined size that shares the index information.

Considering at least one of an inter prediction mode of a current block or a size of a current block, any one of a plurality of pre-defined candidate lists may be selected. For an affine mode, since affine model-based motion compensation is performed in a unit of a small block such as a 4x4 block, an interpolation filter with a relatively short filter length may be used. On the other hand, for a general inter mode such as a merge mode and an AMVP mode, since translational motion compensation is performed, an interpolation filter with a relatively long filter length may be used. In addition, for a general inter mode, an interpolation filter with a different filter length and/or filter type may be used according to a size of a current block.

As an example, when an inter prediction mode of a current block is an affine mode, a candidate list for a current block may include at least one of a 6-tap DCT-IF, a 8-tap DCT-IF, a 6-tap Gaussian interpolation filter, or a 8-tap Gaussian interpolation filter. However, it is just an example, and at least one of the interpolation filter candidates in the candidate list may have a 4-tap filter length. When an inter prediction mode of a current block is a general inter mode, a candidate list for a current block may include at least one of a 8-tap DCT-IF, a 12-tap DCT-IF, a 8-tap sharpening interpolation filter, or a 12-tap sharpening interpolation filter. However, it is just an example, and at least one of the interpolation filter candidates in the candidate list may have a filter length of 6-tap or 10-tap. Alternatively, when an inter prediction mode of a current block is a general inter mode, a candidate list for a current block may include at least one of a 12-tap DCT-IF, a 12-tap Gaussian interpolation filter, or a 12-tap sharpening interpolation filter. However, it is just an example, and at least one of the interpolation filter candidates in the candidate list may have a filter length of 10-tap, 14-tap, or 16-tap.

Meanwhile, when a size of a current block is less than or equal to a predetermined threshold size, a candidate list for a current block may include at least one of a 8-tap DCT-IF, a 12-tap DCT-IF, a 8-tap sharpening interpolation filter, or a 12-tap sharpening interpolation filter. However, it is just an example, and at least one of the interpolation filter candidates in the candidate list may have a filter length of 6-tap or 10-tap. On the other hand, when a size of a current block is larger than the threshold size, a candidate list for a current block may include at least one of a 12-tap DCT-IF, a 12-tap Gaussian interpolation filter, or a 12-tap sharpening interpolation filter. However, it is just an example, and at least one of the interpolation filter candidates in the candidate list may have a filter length of 10-tap, 14-tap, or 16-tap. A size of the current block may be expressed by at least one of a width, a height, the sum of a width and a height, the product of a width and a height, the minimum value/the maximum value of a width and a height, or a ratio of a width and a height of a current block. The threshold size may be an integer of 16, 32, 64, 128, 256, 512, or more.

Alternatively, one candidate list may include interpolation filter candidates with the same filter length, and may not include interpolation filter candidates with a different filter length. One candidate list may include interpolation filter candidates with the same filter type and may not include interpolation filter candidates with a different filter type.

Table 8 below shows a candidate list according to an inter prediction mode and a size of a current block. It is just an example, and a condition regarding a block size, and a filter type, a filter length and the number of interpolation filter candidates may be changed.

[Table 8]

| index | Affine Mode | General Inter Mode (WxH < = 512) | General Inter mode (WxH > 512) |
|---|---|---|---|
| 0 | DCT-IF, 6-tap | DCT-IF, 8-tap | DCT-IF, 12-tap |
| 1 | DCT-IF, 8-tap | DCT-IF, 12-tap | Gaussian IF, 12-tap |
| 2 | Gaussian IF, 6-tap | Sharpening IF, 8-tap | Sharpening IF, 12-tap |
| 3 | Gaussian IF, 8-tap | Sharpening IF, 12-tap | - |

Through the above-described embodiment, an interpolation filter of a luma component of a current block may be determined, and an interpolation filter of a chroma component of a current block may be determined based on an interpolation filter pre-determined for a luma component. As an example, an interpolation filter of a chroma component may have the same filter type as an interpolation filter of a luma component. A filter length of an interpolation filter of a chroma component may be half of a filter length of an interpolation filter of a luma component. Alternatively, through the above-described embodiment, an interpolation filter of a chroma component may be determined independently from an interpolation filter of a luma component.

As described above, in determining an interpolation filter of a current block, at least one of index information (hereinafter, referred to as first index information) specifying any one of a plurality of interpolation filter candidates belonging to one candidate list or index information (hereinafter, referred to as second index information) specifying any one of a plurality of pre-defined candidate lists may be used. This index information may be stored in a current block so that it may be propagated to a block that is decoded after a current block. As an example, the first index information may be stored in a current block for propagation to a next block, and the second index information may not be stored in a current block. Alternatively, the first index information may not be stored in a current block, and the second index information may be stored in a current block for propagation to a next block. Alternatively, both first and second index information may be stored in a current block for propagation to a next block.

When an interpolation filter of a current block is determined based on a reordered candidate list, the first index information may be encoded based on an index of a reordered candidate list. It may be different from an index allocated to a corresponding interpolation filter candidate in a non-reordered candidate list. Here, a corresponding interpolation filter candidate may refer to an interpolation filter candidate having the same index as the first index information in a reordered candidate list. When first index information encoded based on an index of a reordered candidate list is stored as it is and propagated to a next block, the next block may use a filter other than an interpolation filter used in a corresponding block where first index information is stored. Accordingly, separately from first index information, an index allocated to a corresponding interpolation filter candidate in a non-reordered candidate list may be stored for propagation to a next block.

As described above, an interpolation filter may be determined in a unit of a picture and/or a slice, and in this case, an interpolation filter for a current picture/slice may be determined by considering an interpolation filter of a picture/a slice decoded before a current picture/slice.

As an example, an interpolation filter may be propagated in a unit of a picture and/or a slice. An interpolation filter of a currently decoded picture/slice may be determined by considering an interpolation filter that is most frequently used in a previously decoded picture/slice. When any one of a plurality of candidate lists is selected in a unit of a picture and/or a slice, a plurality of candidate lists for a current picture/slice may be reconfigured by including a candidate list selected in a previous picture/slice. When any one of a plurality of interpolation filter candidates is selected in a unit of a picture and/or a slice, a candidate list for a current picture/slice may be reconfigured by including an interpolation filter candidate selected in a previous picture/slice. When any one of a plurality of candidate lists is selected in a unit of a coding unit, a plurality of candidate lists for a current block may be reconfigured by including a candidate list selected in a previous picture/slice. When any one of a plurality of interpolation filter candidates belonging to one candidate list is selected in a unit of a coding unit, a candidate list for a current block may be reconfigured by including an interpolation filter candidate selected in a previous picture/slice.

Referring to FIG. 4, based on an interpolation filter of a current block, a prediction sample of a current block may be generated S410.

Specifically, an interpolation filter of a current block may be applied to reconstructed samples in a reference picture of a current block to generate a sample of a reference block of a current block. A sample of the generated reference block may be used as a prediction sample of a current block.

When the current block is encoded by bidirectional prediction, an interpolation filter of the current block may be applied equally to a reference picture in an L0 direction and a reference picture in an L1 direction of a current block. Alternatively, an interpolation filter of the current block may be determined for an L0 direction and an L1 direction, respectively, and in this case, an interpolation filter in an L0 direction may be applied to a reference picture in an L0 direction and an interpolation filter in an L1 direction may be applied to a reference picture in an L1 direction.

An interpolation filter of the current block may be applied to reference pictures in L0 and L1 directions to generate reference blocks in L0 and L1 directions respectively, and a prediction sample of a current block may be generated based on a weighted sum between a sample of a reference block in an L1 direction and a sample of a reference block in an L1 direction.

FIG. 5 shows a schematic configuration of an inter predictor 332 that performs an inter prediction method according to the present disclosure.

Referring to FIG. 5, an inter predictor 332 may include an interpolation filter determiner 500 and a prediction sample generator 510.

An interpolation filter determiner 500 may determine an interpolation filter of a current block. An interpolation filter of the current block may be derived from a candidate list including a plurality of interpolation filter candidates pre-defined in a decoding apparatus. A method for configuring the candidate list is the same as described by referring to FIG. 4.

An interpolation filter determiner 500 may determine an interpolation filter of a current block based on any one of a cost-based determination method, a reordered candidate list and index information-based determination method, or an index information-based determination method described by referring to FIG. 4.

Alternatively, an interpolation filter determiner 500 may selectively use any one of a plurality of determination methods pre-defined in a decoding apparatus to determine an interpolation filter of a current block. Here, a plurality of pre-defined determination methods may include at least one of a cost-based determination method, a reordered candidate list and index information-based determination method, or an index information-based determination method described above. For the selective use, information specifying any one of a plurality of determination methods may be explicitly signaled, or the information may be implicitly derived based on a parameter of a current block.

An interpolation filter determined through the above-described method may be equally applied to generate a reference block in an L0 direction of a current block and a reference block in an L1 direction. Alternatively, an interpolation filter determiner 500 may determine an interpolation filter for each reference picture list respectively, which is described in detail by referring to FIG. 4, and a detailed description will be omitted here.

In an interpolation filter determiner 500, the adaptive interpolation filter technique may be adaptively used based on a predetermined variable (UseAdaptiveFilter). The UseAdaptiveFilter is a variable representing whether an adaptive interpolation filter technique is used for a current block, and when UseAdaptiveFilter is 1, an adaptive interpolation filter technique may be used for a current block, and when UseAdaptiveFilter is 0, an adaptive interpolation filter technique may not be used for a current block. A method for deriving UseAdaptiveFilter is the same as described in FIG. 4.

An interpolation filter determiner 500 may select any one of a plurality of candidate lists that are pre-defined equally for an encoding apparatus and a decoding apparatus. A method for configuring a plurality of pre-defined candidate lists and the method for selecting any one candidate list are the same as described in FIG. 4.

An interpolation filter determiner 500 may determine an interpolation filter for a luma component of a current block according to the above-described embodiment and may determine an interpolation filter for a chroma component based on an interpolation filter of a luma component. Alternatively, an interpolation filter determiner 500 may independently determine an interpolation filter of a luma component and an interpolation filter of a chroma component according to the above-described embodiment.

An interpolation filter determiner 500 may consider at least one of a candidate list or an interpolation filter candidate used in a previous picture/slice in determining an interpolation filter for a current block or a current picture/slice.

A prediction sample generator 510 may generate a prediction sample of a current block based on an interpolation filter of a current block. In this case, an interpolation filter of the current block may be applied equally to a reference picture in an L0 direction and a reference picture in an L1 direction of a current block. Alternatively, when an interpolation filter of the current block is determined for an L0 direction and an L1 direction, respectively, a prediction sample generator 510 may apply an interpolation filter in an L0 direction to a reference picture in an L0 direction and apply an interpolation filter in an L1 direction to a reference picture in an L1 direction.

FIG. 6 shows an inter prediction method performed by an encoding apparatus 200 as an embodiment according to the present disclosure.

Referring to FIG. 6, an interpolation filter of a current block may be determined S600.

An interpolation filter of a current block may be determined from a candidate list including a plurality of interpolation filter candidates pre-defined in an encoding apparatus. A method for configuring the candidate list is the same as described by referring to FIG. 4, and an overlapping description will be omitted here.

Hereinafter, a method for determining an interpolation filter of a current block based on the candidate list will be described in detail.

Cost-based Determination Method

In terms of an encoding apparatus, a cost may be calculated for each interpolation filter candidate belonging to a candidate list. Among the costs calculated based on the interpolation filter candidates, one interpolation filter candidate with the minimum cost may be selected. The selected interpolation filter candidate may be set as an interpolation filter of a current block. It is the same as described by referring to FIG. 4, and an overlapping description will be omitted here.

Reordered Candidate List and Index Information Encoding-based Determination Method

In terms of an encoding apparatus, a cost may be calculated for each interpolation filter candidate belonging to a candidate list. In ascending order of calculated costs, interpolation filter candidates belonging to a candidate list may be reordered. An optimal interpolation filter candidate may be determined in a reordered candidate list, and index information indicating a corresponding interpolation filter candidate may be encoded and inserted into a bitstream. Here, index information may be encoded based on an index of a reordered candidate list.

As an example, it is assumed that a candidate list includes three interpolation filter candidates, i.e., first to third interpolation filter candidates, and index 0 to 2 are allocated to first to third interpolation filter candidates, respectively.

Costs of cost0 to cost2 may be calculated for first to third interpolation filter candidates, respectively. In this case, it is assumed that when calculated costs are ordered in ascending order, they are ordered in the order of cost1, cost2 and cost0. In this case, if interpolation filter candidates are reordered in ascending order of costs, the candidate list may be reordered in the order of a second interpolation filter candidate, a third interpolation filter candidate and a first interpolation filter candidate. In other words, an index of 0 may be allocated to a second interpolation filter candidate, an index of 1 may be allocated to a third interpolation filter candidate, and an index of 2 may be allocated to a first interpolation filter candidate.

When a third interpolation filter candidate that an index of 1 is allocated in a reordered candidate list is determined as an optimal interpolation filter candidate, an interpolation filter of a current block may be set as a third interpolation filter candidate and index information with a value of 1 may be encoded.

Alternatively, it is assumed that a candidate list includes five interpolation filter candidates, i.e., first to fifth interpolation filter candidates, and index 0 to 4 are allocated to first to fifth interpolation filter candidates, respectively.

Costs of cost0 to cost4 may be calculated for first to fifth interpolation filter candidates, respectively. In this case, it is assumed that when calculated costs are ordered in ascending order, they are ordered in the order of cost1, cost2, cost0, cost3, and cost4. In this case, if interpolation filter candidates are reordered in ascending order of the costs, the candidate list may be reordered in the order of a second interpolation filter candidate, a third interpolation filter candidate, a first interpolation filter candidate, a fourth interpolation filter candidate and a fifth interpolation filter candidate. In other words, an index of 0 may be allocated to a second interpolation filter candidate, an index of 1 may be allocated to a third interpolation filter candidate, an index of 2 may be allocated to a first interpolation filter candidate, an index of 3 may be allocated to a fourth interpolation filter candidate and an index of 4 may be allocated to a fifth interpolation filter candidate.

Any one of N top interpolation filter candidates belonging to a reordered candidate list may be set as an interpolation filter of a current block. Index information may be encoded for N top interpolation filter candidates belonging to a reordered candidate list. When N is 3, a value of index information is an integer in the range of 0 to 2, and may indicate any one of three top interpolation filter candidates belonging to a reordered candidate list.

Alternatively, each cost may be calculated for N top interpolation filter candidates among the five interpolation filter candidates belonging to the candidate list, and a cost may not be calculated for the remaining interpolation filter candidates. Hereinafter, for convenience of a description, it is assumed that N is 3, but the present disclosure is not limited thereto, and N may be 2 or 4.

Costs of cost0 to cost2 may be calculated for top three interpolation filter candidates, i.e., first to third interpolation filter candidates. In this case, it is assumed that when calculated costs are ordered in ascending order, they are ordered in the order of cost1, cost2 and cost0. In this case, if interpolation filter candidates are reordered in ascending order of the costs, the candidate list may be reordered in the order of a second interpolation filter candidate, a third interpolation filter candidate, a first interpolation filter candidate, a fourth interpolation filter candidate and a fifth interpolation filter candidate.

Any one of N top interpolation filter candidates where a cost is calculated may be set as an interpolation filter of a current block. Index information may be encoded for N top interpolation filter candidates where the cost is calculated. When N is 3, a value of index information is an integer in the range of 0 to 2, and may indicate any one of three top interpolation filter candidates belonging to a reordered candidate list.

Index Information Encoding-based Determination Method

Index information in this embodiment may be encoded based on an index of a candidate list that is pre-defined equally for an encoding apparatus and a decoding apparatus, not a reordered candidate list. In this case, a process of calculating a cost for each interpolation filter candidate belonging to the candidate list and a process of reordering interpolation filter candidates of a candidate list based on a calculated cost may be omitted. In other words, any one of a plurality of interpolation filter candidates belonging to a candidate list may be set as an interpolation filter of a current block, and index information indicating any one of a plurality of interpolation filter candidates may be encoded and inserted into a bitstream.

An interpolation filter of a current block may be determined by selectively using any one of a plurality of determination methods pre-defined in an encoding apparatus. The plurality of pre-defined determination methods may include at least one of a cost-based determination method, a reordered candidate list and index information encoding-based determination method, or an index information encoding-based determination method described above. Information specifying any one selected from the plurality of determination methods may be encoded and inserted into a bitstream. Alternatively, any one of the plurality of determination methods may be implicitly determined based on a parameter of a current block. The parameter may include at least one of a position, a size, a shape, a division type, a component type, an inter prediction mode type or whether a block is encoded by bidirectional prediction.

An interpolation filter determined through the above-described method may be equally applied to generate a reference block in an L0 direction of a current block and a reference block in an L1 direction. Alternatively, as described later, each interpolation filter may be determined for each reference picture list, and even in this case, the above-described method may be applied in the same/similar manner, and an overlapping description is omitted.

Cost-based Determination Method

For each of L0 and L1 directions, costs corresponding to interpolation filter candidates belonging to a candidate list may be calculated, respectively. Based on calculated costs, an interpolation filter may be determined for each of L0 and L1 directions. It is the same as described by referring to FIG. 4, and an overlapping description will be omitted here.

Reordered Candidate List and Index Information Encoding-based Determination Method

For each of L0 and L1 directions, costs corresponding to all or part of the interpolation filter candidates belonging to a candidate list may be calculated respectively. Interpolation filter candidates belonging to a candidate list may be reordered in ascending order of costs calculated for an L0 direction. Likewise, interpolation filter candidates belonging to a candidate list may be reordered in ascending order of costs calculated for an L1 direction.

An interpolation filter of a current block may be determined as any one of the interpolation filter candidates belonging to a reordered candidate list. Index information indicating any one of the interpolation filter candidates belonging to the reordered candidate list may be encoded and inserted into a bitstream. The index information may be encoded based on an index of a reordered candidate list.

As an example, the index information may be encoded for an L0 direction and an L1 direction, respectively. Index information in an L0 direction may be encoded based on an index of a reordered candidate list for an L0 direction, and may indicate any one of the interpolation filter candidates of a reordered candidate list for an L0 direction. Index information in an L1 direction may be encoded based on an index of a reordered candidate list for an L1 direction, and may indicate any one of the interpolation filter candidates of a reordered candidate list for an L1 direction.

Alternatively, the index information may indicate any one of the index sets pre-defined in an encoding apparatus. Each index set may be configured with an index indicating an interpolation filter in an L0 direction and an index indicating an interpolation filter in an L1 direction. Here, index information may be encoded based on an index of a reordered candidate list. As an example, referring to Table 2, when an interpolation filter candidate with an index of 0 in a reordered candidate list for an L0 direction is determined as an interpolation filter in an L0 direction of a current block and an interpolation filter candidate with an index of 1 in a reordered candidate list for an L1 direction is determined as an interpolation filter in an L1 direction of a current block, index information which is a value of 1 indicating an index set of (0,1) may be encoded.

Index Information Encoding-based Determination Method

Index information may be encoded for each of L0 and L1 directions of a current block. Index information in this embodiment may be encoded based on an index of a candidate list that is pre-defined equally for an encoding apparatus and a decoding apparatus, not a reordered candidate list. In this case, for each of L0 and L1 directions, a process of calculating costs corresponding to interpolation filter candidates belonging to the candidate list and a process of reordering interpolation filter candidates of a candidate list based on calculated costs may be omitted.

Specifically, an interpolation filter in an L0 direction may be determined as any one of the interpolation filter candidates of a pre-defined candidate list, and index information in an L0 direction indicating any one of the interpolation filter candidates may be encoded. Similarly, an interpolation filter in an L1 direction may be determined as another of the interpolation filter candidates of a pre-defined candidate list, and index information in an L1 direction indicating another of the interpolation filter candidates may be encoded. However, when a value of index information in an L1 direction encoded is greater than a value of index information in an L0 direction, a value obtained by subtracting 1 from a value of index information in an L1 direction encoded may be encoded.

An interpolation filter of a current block may be adaptively determined based on the candidate list, which is referred to as an adaptive interpolation filter technique below. An adaptive interpolation filter technique may be used adaptively based on a predetermined variable (UseAdaptiveFilter). Here, UseAdaptiveFilter may represent whether an adaptive interpolation filter technique is used for a current block. As an example, when UseAdaptiveFilter is 1, an adaptive interpolation filter technique may be used for a current block. In this case, an interpolation filter of a current block may be determined based on a candidate list through the above-described method. On the other hand, when UseAdaptiveFilter is 0, an adaptive interpolation filter technique may not be used for a current block. In this case, an interpolation filter of a current block may be determined as a default interpolation filter that is pre-defined equally for an encoding apparatus and a decoding apparatus.

UseAdaptiveFilter may be derived based on flag information (adaptive_filter_flag) encoded in a unit of a coding unit (CU). The adaptive_filter_flag may be encoded and inserted into a bitstream when a predetermined condition is satisfied. It is described by referring to FIG. 4, and a detailed description will be omitted here.

Alternatively, UseAdaptiveFilter may be implicitly derived based on whether a predetermined condition is satisfied, which is described by referring to FIG. 4, and a detailed description will be omitted here.

Alternatively, whether to use an adaptive interpolation filter technique may be determined in a unit of a picture and/or a slice, and at least one of pic adaptive_if flag in a unit of a picture or slice adaptive_if flag in a unit of a slice may be encoded. In addition, even when the pic adaptive_if flag or slice adaptive_if flag indicates that an adaptive interpolation filter technique is used, whether an adaptive interpolation filter technique is used for each coding block may be determined. It is described by referring to FIG. 4, and a detailed description will be omitted here.

The above-described candidate list may be any one selected from a plurality of candidate lists that are pre-defined equally for an encoding apparatus and a decoding apparatus. A method for configuring a plurality of candidate lists and a method for selecting any one of a plurality of candidate lists are the same as described in FIG. 4, and an overlapping description will be omitted here.

In a unit of a picture and/or a slice, based on a flag representing whether an adaptive interpolation filter technique is used, index information specifying any one of the plurality of pre-defined candidate lists may be encoded. As an example, when an adaptive interpolation filter technique is used for a corresponding picture according to pic adaptive_if flag, the index information may be additionally encoded. Alternatively, when an adaptive interpolation filter technique is used for a corresponding slice according to slice adaptive_if flag, the index information may be additionally encoded. Any one candidate list specified among the plurality of pre-defined candidate lists may be shared by coding blocks belonging to a corresponding picture or slice. Alternatively, one index information integrating a flag representing whether the adaptive interpolation filter technique is used and the index information may be encoded. Alternatively, based on at least one of whether a picture and/or a slice is a P slice, whether a picture and/or a slice is a B slice, or a distance between a current picture and a reference picture, any one of a plurality of pre-defined candidate lists may be implicitly determined. Based on a quantization parameter of a picture and/or a slice, any one of a plurality of pre-defined candidate lists may be implicitly determined.

In a unit of a coding unit, any one of a plurality of pre-defined candidate lists may be selectively used. In a unit of a coding unit, index information specifying any one of a plurality of pre-defined candidate lists may be encoded. Alternatively, any one of a plurality of pre-defined candidate lists may be selected by considering at least one of an inter prediction mode of a current block or a size of a current block.

Through the above-described embodiment, an interpolation filter of a luma component of a current block may be determined, and an interpolation filter of a chroma component of a current block may be determined based on an interpolation filter pre-determined for a luma component. Alternatively, through the above-described embodiment, an interpolation filter of a chroma component may be determined independently from an interpolation filter of a luma component.

In the process of determining an interpolation filter of a current block, at least one of index information (hereinafter, referred to as first index information) specifying any one of a plurality of interpolation filter candidates belonging to one candidate list or index information (hereinafter, referred to as second index information) specifying any one of a plurality of pre-defined candidate lists may be encoded/derived. This index information may be stored in a current block so that it may be propagated to a block encoded after a current block.

When an interpolation filter of a current block is determined based on a reordered candidate list, an index in a non-reordered candidate list may be stored for propagation to a next block.

As described above, an interpolation filter may be determined in a unit of a picture and/or a slice, and in this case, an interpolation filter for a current picture/slice may be determined by considering an interpolation filter of a picture/a slice encoded before a current picture/slice.

Referring to FIG. 6, a prediction sample of a current block may be generated based on an interpolation filter of a current block S610.

Specifically, an interpolation filter of a current block may be applied to reconstructed samples in a reference picture of a current block to generate a sample of a reference block of a current block. A sample of the generated reference block may be used as a prediction sample of a current block.

When the current block is encoded by bidirectional prediction, an interpolation filter of the current block may be applied equally to a reference picture in an L0 direction and a reference picture in an L1 direction of a current block. Alternatively, an interpolation filter of the current block may be determined for an L0 direction and an L1 direction, respectively, and in this case, an interpolation filter in an L0 direction may be applied to a reference picture in an L0 direction and an interpolation filter in an L1 direction may be applied to a reference picture in an L1 direction.

An interpolation filter of the current block may be applied to reference pictures in L0 and L1 directions to generate reference blocks in L0 and L1 directions respectively, and a prediction sample of a current block may be generated based on a weighted sum between a sample of a reference block in an L1 direction and a sample of a reference block in an L1 direction.

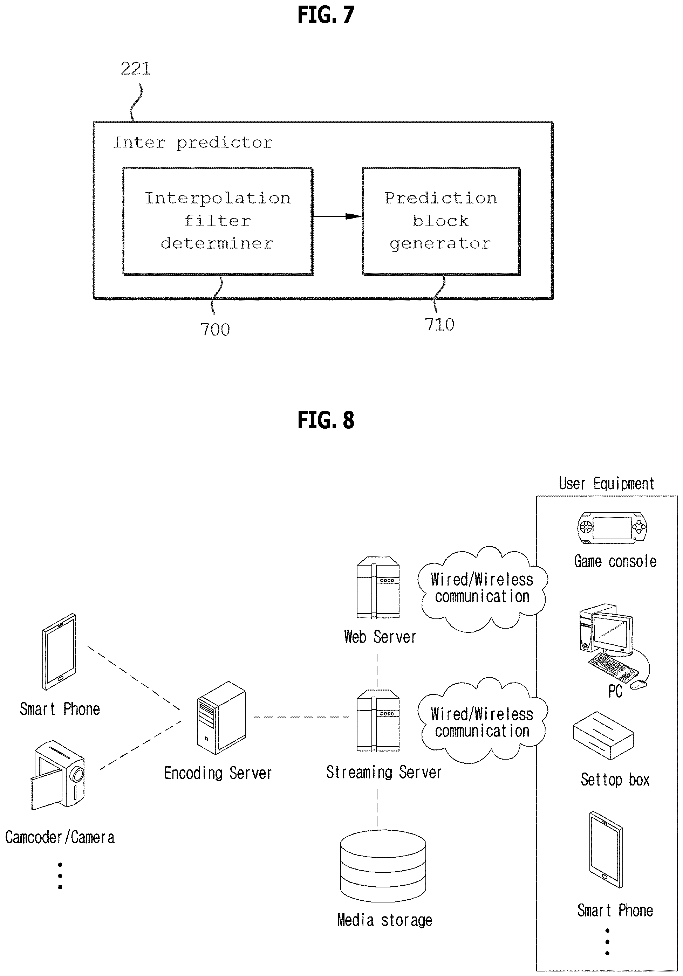

FIG. 7 shows a schematic configuration of an inter predictor 221 that performs an inter prediction method according to the present disclosure.

Referring to FIG. 7, an inter predictor 221 may include an interpolation filter determiner 700 and a prediction sample generator 710.

An interpolation filter determiner 700 may determine an interpolation filter of a current block. An interpolation filter of the current block may be determined from a candidate list including a plurality of interpolation filter candidates pre-defined in an encoding apparatus. A method for configuring the candidate list is the same as described by referring to FIG. 4.

An interpolation filter determiner 700 may determine an interpolation filter of a current block based on any one of a cost-based determination method, a reordered candidate list and index information encoding-based determination method, or an index information encoding-based determination method described by referring to FIG. 6.

Alternatively, an interpolation filter determiner 700 may selectively use any one of a plurality of determination methods pre-defined in an encoding apparatus to determine an interpolation filter of a current block. Here, a plurality of pre-defined determination methods may include at least one of a cost-based determination method, a reordered candidate list and index information encoding-based determination method, or an index information encoding-based determination method described above.

An interpolation filter determined through the above-described method may be equally applied to generate a reference block in an L0 direction of a current block and a reference block in an L1 direction. Alternatively, an interpolation filter determiner 700 may determine an interpolation filter for each reference picture list, respectively, and it is the same as described in detail by referring to to FIG. 6.

In an interpolation filter determiner 700, the adaptive interpolation filter technique may be adaptively used based on a predetermined variable (UseAdaptiveFilter). The UseAdaptiveFilter is a variable representing whether an adaptive interpolation filter technique is used for a current block, and when UseAdaptiveFilter is 1, an adaptive interpolation filter technique may be used for a current block, and when UseAdaptiveFilter is 0, an adaptive interpolation filter technique may not be used for a current block. A method for deriving UseAdaptiveFilter is the same as described in FIG. 6.

An interpolation filter determiner 700 may select any one of a plurality of candidate lists that are pre-defined equally for an encoding apparatus and a decoding apparatus. A method for configuring a plurality of pre-defined candidate lists and the method for selecting any one candidate list are the same as described in FIG. 4.

An interpolation filter determiner 700 may determine an interpolation filter for a luma component of a current block according to the above-described embodiment and may determine an interpolation filter for a chroma component based on an interpolation filter of a luma component. Alternatively, an interpolation filter determiner 700 may independently determine an interpolation filter of a luma component and an interpolation filter of a chroma component according to the above-described embodiment.

An interpolation filter determiner 700 may consider at least one of a candidate list or an interpolation filter candidate used in a previous picture/slice in determining an interpolation filter for a current block or a current picture/slice.

A prediction sample generator 710 may generate a prediction sample of a current block by applying an interpolation filter of a current block equally to a reference picture in an L0 direction and a reference picture in an L1 direction of a current block. Alternatively, when an interpolation filter of the current block is determined for each of L0 and L1 directions, a prediction sample generator 710 may generate a prediction sample of a current block by applying an interpolation filter in an L0 direction and an interpolation filter in an L1 direction to a reference picture in an L0 direction and a reference picture in an L1 direction, respectively.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

    determining an interpolation filter of a current block based on a candidate list, the candidate list including a plurality of interpolation filter candidates pre-defined in a decoding apparatus;
    generating a prediction sample of the current block based on the interpolation filter of the current block; and
    reconstructing the current block based on the prediction sample of the current block.

2. The method of claim 1, wherein determining the interpolation filter comprises calculating SAD values corresponding to the plurality of interpolation filter candidates respectively,

    wherein the SAD values are calculated based on a template region of the current block and a template region of a reference block, and
    wherein the reference block includes at least one of a reference block in an L0 direction or a reference block in an L1 direction.

3. The method of claim 2, wherein a reordered candidate list is generated by reordering the interpolation filter candidates in an ascending order of the SAD values,

    wherein the interpolation filter of the current block is determined from the reordered candidate list based on index information signaled from a bitstream, and
    wherein the index information indicates one of the plurality of interpolation filter candidates belonging to the reordered candidate list.

4. The method of claim 2, wherein the SAD values are calculated for a reference picture list 0 and a reference picture list 1, respectively.

5. The method of claim 1, wherein the candidate list includes at least one of a DCT-based interpolation filter, a Gaussian interpolation filter, or a sharpening interpolation filter,

    wherein the DCT-based interpolation filter includes at least one of a 8-tap first DCT-based interpolation filter or a 12-tap second DCT-based interpolation filter, and
    wherein the Gaussian interpolation filter includes at least one of a 8-tap first Gaussian interpolation filter or a 12-tap second Gaussian interpolation filter.

6. The method of claim 1, wherein determining the interpolation filter of the current block based on the candidate list is performed based on first flag information indicating whether an adaptive interpolation filter technique is used for the current block.

7. The method of claim 6, wherein the first flag information is determined based on at least one of second flag information indicating whether the adaptive filter technique is allowed in a video sequence including the current block, a quantization parameter of the current block, a size of the current block, or an inter prediction mode of the current block.

8. The method of claim 1, wherein the candidate list is determined as one of a plurality of candidate lists pre-defined in the decoding apparatus.

9. The method of claim 1, wherein an interpolation filter for a chroma component of the current block is determined independently from an interpolation filter for a luma component of the current block.

10. The method of claim 1, wherein the candidate list is reconfigured based on an interpolation filter used in at least one of a picture, a slice or a block decoded before the current block.

11. An image encoding method, comprising:

determining an interpolation filter of a current block based on a candidate list, the candidate list including a plurality of interpolation filter candidates pre-defined in an encoding apparatus;
generating a prediction sample of the current block based on the interpolation filter of the current block; and
encoding the current block based on the prediction sample of the current block.

12. A computer readable storage medium storing a bitstream generated by an image encoding method, the image encoding method comprising:

determining an interpolation filter of a current block based on a candidate list, the candidate list including a plurality of interpolation filter candidates pre-defined in an encoding apparatus;
generating a prediction sample of the current block based on the interpolation filter of the current block; and
encoding the current block based on the prediction sample of the current block.

**FIG.2**

# FIG.3

## FIG.4

| | |
|---|---|
| Determine interpolation filter of current block | S400 |
| Generate prediction sample of current block based on interpolation filter of current block | S410 |

## FIG. 5

332

Inter predictor

| Interpolation filter determiner | Prediction block generator |
|---|---|

500 510

## FIG. 6

| | |
|---|---|
| Determine interpolation filter of current block | S600 |
| Generate prediction sample of current block based on interpolation filter of current block | S610 |

## FIG. 7

221

Inter predictor

| Interpolation filter determiner | → | Prediction block generator |

700                                              710

## FIG. 8

User Equipment

Game console

Web Server

Wired/Wireless communication

PC

Smart Phone

Encoding Server

Streaming Server

Wired/Wireless communication

Settop box

Camcoder/Camera

Media storage

Smart Phone

<div align="center">

**INTERNATIONAL SEARCH REPORT**

</div>

| | International application No. |
|---|---|
| | **PCT/KR2023/002056** |

| **A.** | **CLASSIFICATION OF SUBJECT MATTER** |
|---|---|

**H04N 19/117**(2014.01)i; **H04N 19/132**(2014.01)i; **H04N 19/176**(2014.01)i; **H04N 19/105**(2014.01)i; **H04N 19/70**(2014.01)i

According to International Patent Classification (IPC) or to both national classification and IPC

| **B.** | **FIELDS SEARCHED** |
|---|---|

Minimum documentation searched (classification system followed by classification symbols)

H04N 19/117(2014.01); H04N 19/105(2014.01); H04N 19/109(2014.01); H04N 19/159(2014.01); H04N 19/517(2014.01); H04N 19/567(2014.01); H04N 19/593(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 후보(candidate), 리스트(list), 보간 필터(interpolation filter), 예측(predict), 샘플(sample), 복원(reconstruct)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2021-0064370 A (HUAWEI TECHNOLOGIES CO., LTD. et al.) 02 June 2021 (2021-06-02) See paragraphs [0032], [0155], [0157], [0170], [0185], [0207], [0219], [0224], [0232], [0323] and [0373]; and claim 27. | 1,8,11-12 |
| Y | | 2-7,9-10 |
| Y | KR 10-2020-0064153 A (LG ELECTRONICS INC.) 05 June 2020 (2020-06-05) See paragraphs [0072], [0075] and [0122]. | 2-4 |
| Y | KR 10-2021-0031783 A (B1 INSTITUTE OF IMAGE TECHNOLOGY, INC.) 22 March 2021 (2021-03-22) See paragraph [0217]. | 5,9 |
| Y | KR 10-2010-0129339 A (QUALCOMM INCORPORATED) 08 December 2010 (2010-12-08) See claims 6-7. | 6-7 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 May 2023** | **23 May 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

33

</div>

**INTERNATIONAL SEARCH REPORT**

International application No.

**PCT/KR2023/002056**

C.    DOCUMENTS CONSIDERED TO BE RELEVANT

| Category* | Citation of document, with indication, where appropriate, of the relevant passages | Relevant to claim No. |
|---|---|---|
| Y | KR 10-2021-0143772 A (BEIJING BYTEDANCE NETWORK TECHNOLOGY CO., LTD. et al.) 29 November 2021 (2021-11-29)<br>     See paragraphs [0229] and [0242]. | 10 |

Form PCT/ISA/210 (second sheet) (July 2022)

<table>
<tr><td colspan="3" align="center">INTERNATIONAL SEARCH REPORT<br>Information on patent family members</td><td colspan="2">International application No.<br><br>**PCT/KR2023/002056**</td></tr>
<tr><td align="center">Patent document<br>cited in search report</td><td align="center">Publication date<br>(day/month/year)</td><td align="center" colspan="2">Patent family member(s)</td><td align="center">Publication date<br>(day/month/year)</td></tr>
<tr><td>KR 10-2021-0064370 A</td><td>02 June 2021</td><td>CN</td><td>111010568 A</td><td>14 April 2020</td></tr>
<tr><td></td><td></td><td>EP</td><td>3855741 A1</td><td>28 July 2021</td></tr>
<tr><td></td><td></td><td>JP</td><td>2022-514160 A</td><td>10 February 2022</td></tr>
<tr><td></td><td></td><td>US</td><td>2021-0227243 A1</td><td>22 July 2021</td></tr>
<tr><td></td><td></td><td>WO</td><td>2020-069655 A1</td><td>09 April 2020</td></tr>
<tr><td>KR 10-2020-0064153 A</td><td>05 June 2020</td><td>KR</td><td>10-2306562 B1</td><td>30 September 2021</td></tr>
<tr><td></td><td></td><td>US</td><td>11070797 B2</td><td>20 July 2021</td></tr>
<tr><td></td><td></td><td>US</td><td>2021-0037238 A1</td><td>04 February 2021</td></tr>
<tr><td></td><td></td><td>WO</td><td>2019-103564 A1</td><td>31 May 2019</td></tr>
<tr><td>KR 10-2021-0031783 A</td><td>22 March 2021</td><td>CN</td><td>111937395 A</td><td>13 November 2020</td></tr>
<tr><td></td><td></td><td>EP</td><td>3780620 A1</td><td>17 February 2021</td></tr>
<tr><td></td><td></td><td>JP</td><td>2022-177266 A</td><td>30 November 2022</td></tr>
<tr><td></td><td></td><td>JP</td><td>7152503 B2</td><td>12 October 2022</td></tr>
<tr><td></td><td></td><td>KR</td><td>10-2020-0013766 A</td><td>07 February 2020</td></tr>
<tr><td></td><td></td><td>KR</td><td>10-2378882 B1</td><td>25 March 2022</td></tr>
<tr><td></td><td></td><td>US</td><td>11297309 B2</td><td>05 April 2022</td></tr>
<tr><td></td><td></td><td>US</td><td>2022-0182602 A1</td><td>09 June 2022</td></tr>
<tr><td></td><td></td><td>WO</td><td>2019-194485 A1</td><td>10 October 2019</td></tr>
<tr><td>KR 10-2010-0129339 A</td><td>08 December 2010</td><td>CN</td><td>101990758 A</td><td>23 March 2011</td></tr>
<tr><td></td><td></td><td>CN</td><td>101990758 B</td><td>20 February 2013</td></tr>
<tr><td></td><td></td><td>EP</td><td>2304961 A1</td><td>06 April 2011</td></tr>
<tr><td></td><td></td><td>EP</td><td>2304961 B1</td><td>09 March 2016</td></tr>
<tr><td></td><td></td><td>JP</td><td>2014-140192 A</td><td>31 July 2014</td></tr>
<tr><td></td><td></td><td>JP</td><td>5536034 B2</td><td>02 July 2014</td></tr>
<tr><td></td><td></td><td>KR</td><td>10-1202633 B1</td><td>19 November 2012</td></tr>
<tr><td></td><td></td><td>US</td><td>10440388 B2</td><td>08 October 2019</td></tr>
<tr><td></td><td></td><td>US</td><td>2020-0107044 A1</td><td>02 April 2020</td></tr>
<tr><td></td><td></td><td>WO</td><td>2009-126915 A1</td><td>15 October 2009</td></tr>
<tr><td>KR 10-2021-0143772 A</td><td>29 November 2021</td><td>CN</td><td>113728633 A</td><td>30 November 2021</td></tr>
<tr><td></td><td></td><td>CN</td><td>113728633 B</td><td>20 December 2022</td></tr>
<tr><td></td><td></td><td>EP</td><td>3932058 A1</td><td>05 January 2022</td></tr>
<tr><td></td><td></td><td>JP</td><td>2022-527896 A</td><td>07 June 2022</td></tr>
<tr><td></td><td></td><td>US</td><td>11595641 B2</td><td>28 February 2023</td></tr>
<tr><td></td><td></td><td>US</td><td>2022-0014791 A1</td><td>13 January 2022</td></tr>
<tr><td></td><td></td><td>WO</td><td>2020-200238 A1</td><td>08 October 2020</td></tr>
</table>

Form PCT/ISA/210 (patent family annex) (July 2022)